# EUROPEAN PATENT SPECIFICATION

(11) **EP 3 967 484 B1**
(45) Date of publication and mention of the grant of the patent: **20.08.2025**
(21) Application number: 20195826.1
(22) Date of filing: 11.09.2020
(51) Int. Cl.: B30B 9/12, B01D 29/82, B30B 9/18, B01D 29/35, B01D 29/64

(54) **APPARATUS FOR SEPARATING LIQUID AND SOLID MATERIAL FROM EACH OTHER**
VORRICHTUNG ZUM TRENNEN VON FLÜSSIGEM UND FESTEM MATERIAL VONEINANDER
APPAREIL DE SÉPARATION DE LIQUIDE ET DE MATÉRIAU SOLIDE

(43) Date of publication of application: 16.03.2022
(73) Proprietor: Eko-Erotus Oy, 62900 Alajärvi (FI)
(72) Inventor: YLI-MANNILA, Matti, 62900 Alajärvi (FI)
(74) Representative: Salomäki, Juha Kari Ensio

(56) References cited:
- EP-A2- 0 395 044
- CN-A- 109 986 824
- DE-A1- 3 925 650
- FI-B- 125 229
- FI-U1- 12 149
- FR-A- 1 328 822
- NL-B1- 2 015 649
- US-A- 3 592 128
- US-A- 3 938 434

## Description

The present invention relates to an apparatus for separating liquid and solid material from each other as defined in the preamble of claim 1.

Apparatuses for separating liquid from solid material or solid matter or dry matter or shorter from solids are commonly used in agriculture, industry and in many other contexts. That kind of separating apparatus is also called a separator. In these devices, the separation of the dry matter from the liquid is carried out by a compression screw that can be also called a helical auger. The compression screw compresses the liquid from the material through the perforated surface of the drum-like screen around the compression screw and conveys the dry matter thus obtained for further use.

In the prior art solutions one disadvantage is the amount of solid materials in the slurry to be separated. Such solids as hay or straw materials and/or other solids easily build up large and tough clumps and piles that wrap around the first end of the compression screw. That decreases the slurry input to the separator apparatus and also the capacity and reliability of the separator. This also increases the need to clean the separator apparatus and thus binds labor.

Also, in the prior art, separators are commonly constructed so that a clearance between the inner surface of the drum-like screen and the outer periphery of the helical screw blade or flighting of the compression screw is as small as possible. The problem in this case is wear of the inner surface of the screen and the outer periphery of the flighting.

Such a wear is corrected by hard welding and turning which causes additional costs and loss of time and loss of capacity.

These kinds of separators operate as expected when a so-called dry matter stopper builds up from the material to be separated in the dry end of the separator. One problem in the prior art solutions is often the fact that the dry matter stopper does not build up fast enough in the starting phase of the separation. Another problem related to the dry matter stopper is that it does not keep steady enough during the separation. In that case too much slurry liquid gets into the dry matter, which spoils the dry matter and also forces the separation process to be interrupted. Also, some cleaning must be done which consumes time and binds labor.

A solution according to the European patent publication No. EP0395044A2 is known in the prior art. The solution is related to a scraper filter system for removing solid components deposited on the surface of a filter element. The solid components come from viscous substances, such as liquids, slurries of soybean, ground fish meat or devil's tongue starch. These materials are relatively easy to handle, and they do not cause a lot of heavy pressure on the spiral impeller blades of the solution.

Also, the Finnish patent publication No. FI125229B discloses an apparatus according to the preamble of claim 1.

The object of the present invention is to eliminate the above-mentioned disadvantages and to provide a simple and inexpensive and at the same time reliable structure for a separator apparatus comprising a compression screw and a screen around it. It is also an object of the present invention to provide a structure which allows greater tolerances between the compression screw and the screen and which improves the reliability, dependability, efficiency, and service life of the apparatus. In addition, one object of the invention is to provide an easily replaceable spare part for the compression screw of the separator apparatus. Also, one object of the invention is to achieve a solution where hay material, straws or other solids in the slurry do not cause clogging problems in the separation process. Yet one object of the invention is to achieve a solution where the dry matter stopper builds up as fast as possible in the second end of the separator and where the dry matter stopper keeps as steady as possible during the separation process. The apparatus according to the present invention is characterized by what is presented in the characterization part of claim 1. Other embodiments of the invention are characterized by what is presented in the other claims.

An aspect of the invention is to provide an apparatus for separating liquid and solid material from each other, which apparatus comprises at least a drum-type screen and a compression screw equipped with a rotating shaft and a flighting and placed to extend through the screen, and which flighting is equipped with a pressure element made of flexible material. According to the invention, the apparatus comprises in the longitudinal direction of the compression screw various sections in each of which the rotating shaft comprises operational structures suited to the operation of that particular section.

The solution of the invention has significant advantages over the solutions of the prior art. Among other things, one advantage of the apparatus is that a separate pressure element mounted on the screw blade or flighting of the compression screw improves the reliability, efficiency, and service life of the apparatus. In addition, a separately installed pressure element allows greater tolerances between the flighting of the compression screw and the inner surface of the screen, which also improves wear resistance.

In the following, the invention will be described in detail by the aid of examples by referring to the attached simplified and diagrammatic drawings, wherein
- Fig. 1: presents in a simplified side view and partially cross-sectioned a separator apparatus where a solution according to the invention may be used,
- Fig. 2: presents in a simplified and diagrammatic way an enlarged side view of the first end of the compression screw of the apparatus,
- Fig. 3: presents in a simplified and diagrammatic way an enlarged top view of the first end of the compression screw of the apparatus in a partially cross-sectioned slurry container in connection with a and partially cross-sectioned dewatering chamber,
- Fig. 4: presents in a simplified and diagrammatic way and cross-sectioned an enlarged side view of a cutting element for solid materials, such as hay, straws and other solids, at the first end area of the compression screw,
- Fig. 5: presents in a simplified and diagrammatic way and cross-sectioned an enlarged top view of a cutting element according to Fig. 4,
- Fig. 6: presents in a simplified and diagrammatic way a side view of a part of a compression screw according to the invention,
- Fig. 7: presents in a simplified and diagrammatic way and partially cross-sectioned a side view of the dry end or second end of the separator apparatus according to the invention in a situation where the dry end is empty,
- Fig. 8: presents in a simplified front view an annular pressure element according to the invention, partially equipped with fastening elements,
- Fig. 9: presents in a simplified and diagrammatic way the helical flighting of the compression screw according to the invention in the cross-section along the sec- tion line D-D in Fig. 6, in the situation where the pressure element is in its position on the side of the flighting but unfastened and without the fastening elements of the pressure element,
- Fig. 10: presents in a simplified and diagrammatic way the helical flighting of the compression screw according to the invention in the cross-section along the section line D-D in Fig. 6, in the situation where the pressure element is fastened onto side of the flighting of the compression screw,
- Fig. 11: presents in a simplified side view a fastening element of the pressure element according to the invention,
- Fig. 12: presents in a back view a nut part of the fastening element according to Fig. 11, and
- Fig. 13: presents in a front view a nut part of the fastening element according to Fig. 11.

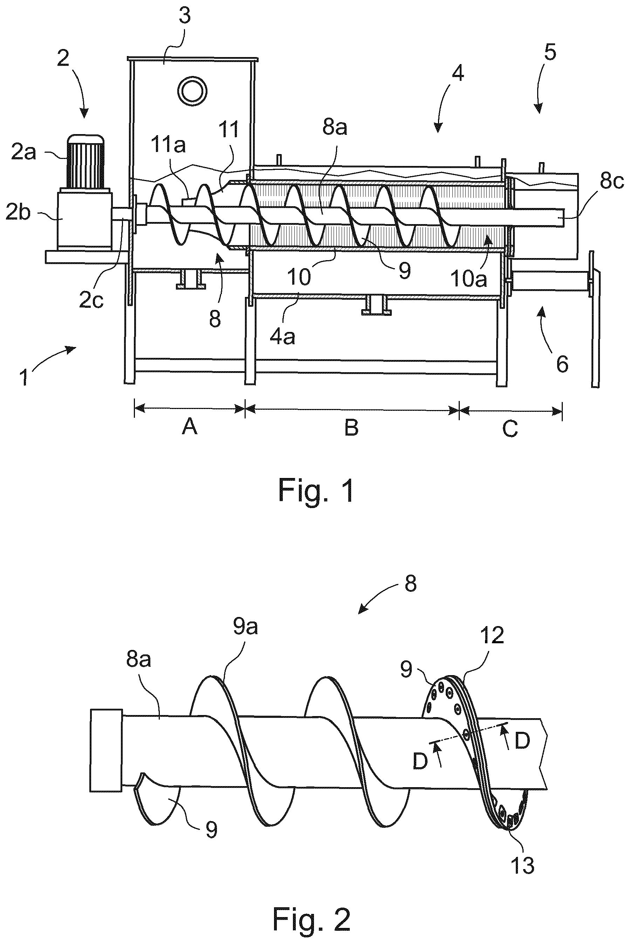

Figure 1 shows schematically, in a simplified manner and partially cross-sectioned one separator apparatus in which the solution according to the invention can be used. The apparatus comprises at least a frame 1, an operating machinery 2, a slurry container 3, a dewatering chamber 4 and a dry end 5 that is in the area of the second end of the frame 1. The slurry container 3 comprises at least one inlet for feeding slurry material to be separated. The slurry material may be, for example, liquid animal manure originated in agriculture. In addition, the separator apparatus may comprise a conveyor 6 to move the separated dry matter for further use. Advantageously, the separator apparatus also comprises a control and electric unit 7 for controlling and powering the separator apparatus.

For the separation or dewatering the separator apparatus comprises an auger-type compression screw 8 that in arranged to rotate partially inside a drum-type screen 10 that is placed inside the dewatering chamber 4. Preferably, the separator apparatus also comprises a cutting element 11 with cutting edges 9a placed inside the slurry container 3 and arranged around the first end of the compression screw 8.

Later in this context the term first side or first end means the part or area that is on the side of the operating machinery 2 and the term second side or second end means the part or area that is on the side of the dry end 5.

Preferably, the frame 1 is a free-standing structure having a support for the operating machinery 2 in its first end, which operating machinery 2 comprises a driving motor 2a and preferably a gearbox 2b. Heading to the second end of the frame 1 the slurry container 3 is placed after the operating machinery 2 which slurry container 3 is preferably fastened to the frame 1. The secondary shaft 2c of the operating machinery 2 transmits the kinetic energy of the driving motor 2a through the gearbox 2b to the compression screw 8. The first end of the compression screw 8 is placed inside the slurry container 3 from which the compression screw 8 extends into the dewatering chamber 4. Preferably, the compression screw 8 comprises a central or rotating shaft 8a, a helical screw blade or flighting 9 around the rotating shaft 8a and a discharge end 8c at the second end of the rotating shaft 8a. The flighting 9 extends from the first end area of the rotating shaft 8a towards the second end of the rotating shaft 8a, preferably covering a part of the length of the rotating shaft 8a.

In relation to the operating machinery 2 the dewatering chamber 4 is behind the slurry container 3. The dewatering chamber 4 comprises the drum-type screen 10 in its inside as mentioned above. The screen 10 has a cylindrical drum containing openings or apertures for the passage of liquid. The compression screw 8 is placed to extend through the drum inside the drum of the screen 10 so that the first end of the rotating shaft 8a of the compression screw 8 is in the slurry container 3 outside the screen 10 and the second end of the of the rotating shaft 8a extends out of the screen 10 to the dry end 5. A collector tray 4a for separated liquid is placed under the drum of the screen 10.

The compression screw 8 according to the invention preferably comprises at least three sequential sections or zones A, B and C which each may have a different structure in relation to the flighting 9 around the rotating shaft 8a. The section A is in the area of the first end of the compression screw 8, section B is in the area of screen 10 and section C is in the area of the second end of rotating shaft 8a, partially inside the screen 10. The structure of each section will be explained later.

When the compression screw 8 is rotated the flighting 9 pushes the material to be separated towards the second end of the compression screw 8. In that case the material to be separated causes a counter pressure against flighting 9 onto the pressure side of the flighting 9. The pressure side is the side facing towards the second end of the compression screw 8, and can also be called as the second side.

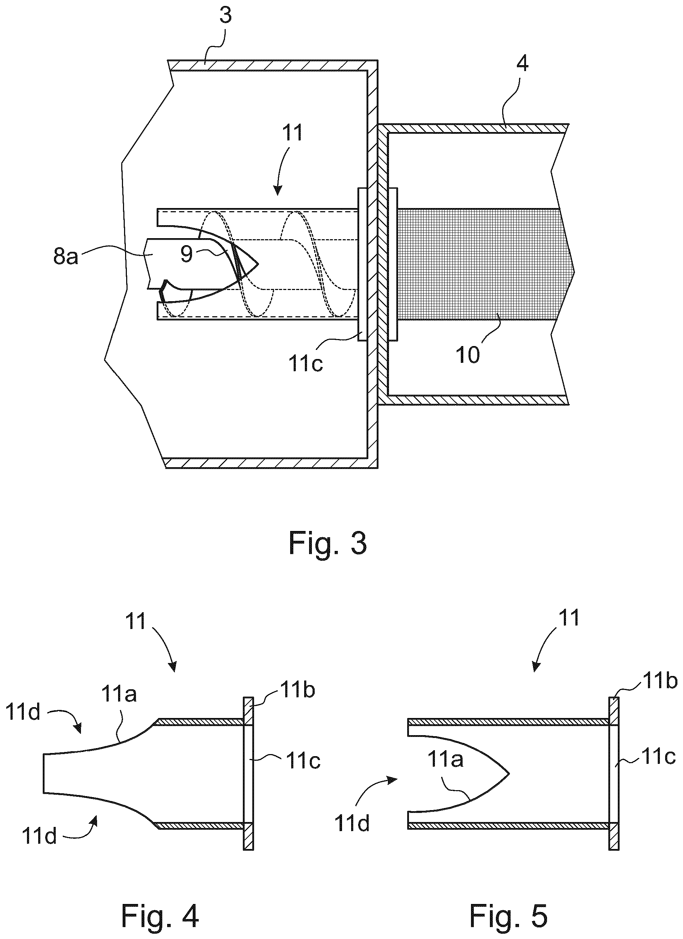

Figs. 2-5 present in a simplified and diagrammatic way enlarged views of the structures related to the first end of the compression screw 8 of the apparatus according to the invention. Fig. 2 presents the first end of the compression screw 8 itself in a side view, Fig. 3 presents an enlarged top view of the first end area of the compression screw 8 in a partially cross-sectioned slurry container 3 that is in connection with a partially cross-sectioned dewatering chamber 4, Fig. 4 presents an enlarged side view of the cross-sectioned cutting element 11, and Fig. 5 presents an enlarged top view of a cross-sectioned cutting element 11.

Fig. 2 presents the first end of the compression screw 8 according to the invention in a side view. Preferably, in the area of section A the first end of the compression screw 8 comprises the flighting 9 that is matched in a close relationship with the inner diameter of the cutting element 11. The outer edge 9a of the flighting 9 on the periphery of the flighting 9 is arranged to a scissors-like shearing action with the cutting edges 11a of the cutting element 11, as the rotating helix shaped flighting 9 passes over the stationary cutting edges 11a.

The length of the flighting 9 extends to the area of the second end of the cutting element 11 and ends before the screen 10. As mentioned earlier, this part of the compression screw 8 comprises the section A and is placed preferably in the slurry container 3. In the section A the structure of the flighting 9 may differ from structures of the flighting 9 in section B and C. Preferebly, the structure of the flighting 9 in the section A is made to endure cutting strains caused by hay, straws and other solids. Thus, the material of the flighting 9, especially in the outer periphery of the flighting 9, in the section A may be more wear-resistant and harder than the material the flighting 9 in the sections B and/or C.

After the section A begins the section B where the structure of the flighting 9 is preferably different. The flighting 9 may still be similar to the flighting 9 in the section A but in the section B a pressure element 12 is fastened with fastening elements 13 onto the second side or pressure side of the flighting 9. The second side of the flighting 9 is facing towards the second end of the compression screw 8 as mentioned earlier. Thus, when the compression screw 8 rotates the pressure element 12 presses and conveys the slurry material towards the second end of the compression screw 8.

Figs. 3-5 present an enlarged view of the first end of the compression screw 8 of the apparatus in a partially cross-sectioned slurry container 3 in connection with a partially cross-sectioned dewatering chamber 4. The cutting element 11 is used to cut solid materials in the slurry, such solids as hay or straw materials and/or other solids, into smaller pieces before the liquid separation.

The cutting element 11 is in its basic shape a cylinder with a flat annular fastening flange 11b in its second end. Seeing from the first end of the compression screw 8 towards its second end the flange 11b is fastened to its place around the compression screw 8 just before the dewatering chamber 4. The annular flange 11b also has a center hole 11c for the compression screw 8 to go through.

In its open first end the cutting element 11 comprises preferably two or more feed openings 11d which can be mutually similar with each other. The feed openings 11d open towards the first end of the cutting element 11, taper curvilinearly towards the second end of the cutting element 11 and close before the second end of the cutting element 11. Thus, the curvilinear, sharp-edged sides of the feed openings 11d form cutting edges 11a which correspond to the outer edge 9a of the periphery of the flighting 9 in the area of section A in the first end of the compression screw 8.

The flighting 9 and the outer edge 9a of the flighting 9 in the first end of the compression screw 8 together with the cutting element 11 and its feed openings 11d and cutting edges 11a form a cutting mechanism for cutting and breaking long hay and straw and clumps and piles of hay, straw and other similar solids into smaller pieces in the first end of the compression screw 8 before the liquid separation process.

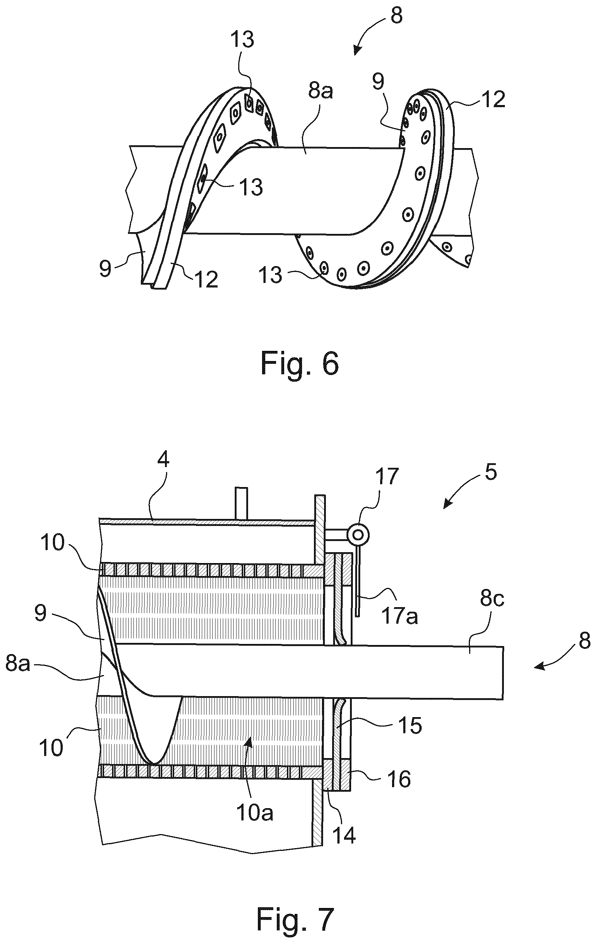

Fig. 6 presents in a simplified and diagrammatic way a side view of a part of a compression screw 8 of the apparatus according to the invention. Preferably, the compression screw 8 comprises the pressure element 12 that is fastened onto the second side of the flighting 9 with fastening elements 13. Intentionally, the view of Fig. 6 is like a fisheye view so that both the flighting 9 and the pressure element 12 are clearly visible in the same figure.

Preferably, the pressure element 12 is placed onto the side of the flighting 9 in the area of section B that is in the area of the screen 10. In that case, the pressure element 12 is fastened, preferably as a continuous element into the flighting 9 that rotates inside the screen 10. The continuous element here means that individual pressure elements 12 are fastened into the flighting 9 one after the other to abut each other with their ends.

Preferably, the pressure elements 12 are in the flighting 9 at least in the area of the first end of the screen 10, advantageously so that at least two, three or four first laps of the flighting 9 are inside the screen 10. Depending on the slurry material to be separated the coverage of the pressure elements 12 may be more than four first laps of the flighting 9 inside the screen 10. At maximum, the coverage may comprise all the laps of the flighting 9 inside the screen 10.

Fig. 7 presents in a simplified and diagrammatic way and partially cross-sectioned a side view of the dry end 5 or second end of the separator apparatus according to the invention in a situation where the dry end 5 and the drum of the screen 10 are empty. This area of the compression screw 8 belongs to the section C as mentioned above. Preferably, the first part of the section C is inside the screen 10 and the second part of the section C is in the dry end 5 outside the dewatering chamber 4 and outside the screen 10. In the section C the compression screw 8 preferably does not have the flighting 9 anymore. The plain rotation shaft 8a makes it possible to create a free space 10a inside the screen 10 in order to create a dry matter stopper or plug which builds up from the dry matter in the space 10a preferably immediately in the initial phase of the separation process and keeps stable and fully operational during the whole separation time.

The structure of the apparatus according to the invention in the section C makes the above mentioned well-functioning dry matter stopper possible. The structure comprises the free space 10a without the flighting 9 in the second end of the screen 10, a reducing element 14 in connection with the second end of the drum of the screen 10, and a counter-pressure element 15 in connection with the reducing element 14. The reducing element 14 and counter-pressure element 15 are preferably fastened into their position at the second end area of the screen 10 by the help of an annular fastening ring 16.

The free space 10a and its length are important for determining the dry matter content of the dry matter. The greater the length of the free space 10a, the drier dry matter is obtained. Suitably, the relation of the length of the free space 10a to the inner diameter of the drum of the screen 10 is, for example, between 0,2...1,5. Preferably, the said relation is between 0,8...1,2.

The reducing element 14 is a flat annular plate with a center hole. The diameter of the center hole is smaller than the inner diameter of the drum of the screen 10 in the second end of the screen 10. In that case, the reducing element 14 forms a shoulder structure to prevent the material to be separated from flowing freely out from the screen 10. The shoulder structure is arranged to slow down the sliding of the dry matter stopper in which case the compression pressure increases in the system. Even a small restriction in the passing through opening in the second end of the screen makes the dry matter content bigger. The liquid content in the dry matter is adjusted with the diameter size of the reducing element 14. Preferably, the reducing element 14 is easily interchangeable. By replacing the reducing element 14 to another reducing element 14 with a smaller center hole the dry matter content can be increased and vice versa.

Preferably, the counter-pressure element 15 is made of unvulcanized rubber or caoutchouc. The counter-pressure element 15 is a flat annular plate with a center hole. The diameter of the center hole is preferably smaller than the outer diameter of the rotation shaft 8a at the position of the counter-pressure element 15. In that case the counter-pressure element 15 is pressed tightly from its center hole onto the rotation shaft 8a. The counter-pressure element 15 is arranged to help creating a dry matter stopper as soon as possible after the separator apparatus has been started and to maintain the dry matter stopper as stable as possible.

The dry end 5 of the separator apparatus further has a monitoring element 17, for example a limit switch arranged to monitor the state of the counter-pressure element 15. The monitoring element 17 is in contact with the counter-pressure element 15. When the separation is in progress, the counter-pressure element 15 is compressed outwards from its basic position, towards the second end of the rotating shaft 8a, so that the diameter of the center hole of the counter-pressure element 15 increases and its edges rise off the rotating shaft 8a of the compression screw 8. In that case, the lever arm 17a of the monitoring element 17, which lever arm 17a rests on the outer surface of the counter-pressure element 15, turns with an increase in the diameter of the center hole and informs the control and electric unit 7 of the position of the counter-pressure element 15. If, for some reason the dry matter stopper disappears during separation, the counter-pressure element 15 returns to its basic position, whereby the lever arm 17a returns along with the counter-pressure element 15 and switches off the control voltage at a predetermined position.

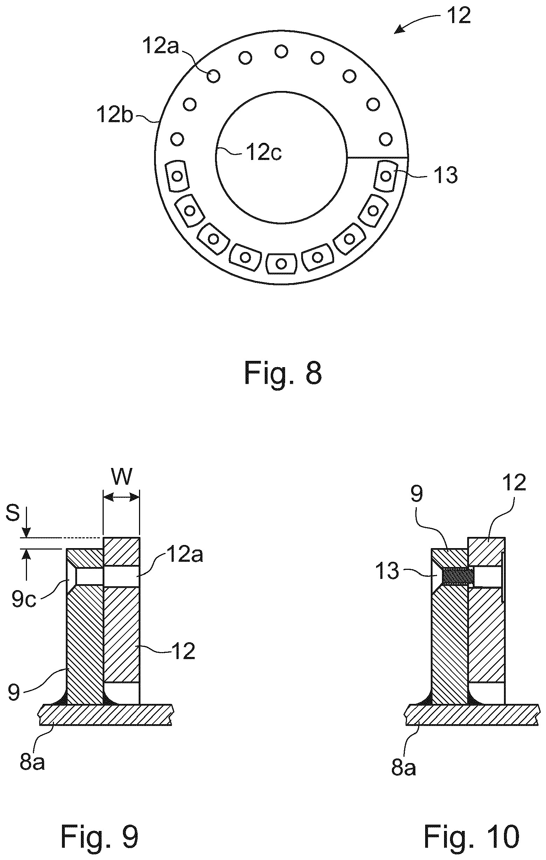

Fig. 8 presents in a simplified front view an annular pressure element 12 according to the invention. The pressure element 12 according to the invention is a flat annular plate with a center hole 12c whose diameter is bigger than the outer diameter of the rotation shaft 8a of the compression screw 8. Advantageously, the pressure element 12 is flexible material, such as rubber or polyurethane. In Fig. 8 the pressure element 12 is partially equipped with fastening elements 13 that are used to fasten the pressure element 12 into flighting 9 of the compression screw 8. For the fastening the pressure element 12 comprises fastening holes 12a that are preferably closer to the outer periphery 12b of the pressure element 12 than the inner periphery 12c of the pressure element 12. That makes the fastening more stable and stronger.

Figs. 9 and 10 present in a simplified and diagrammatic way the helical flighting 9 of the compression screw 8 according to the invention in the cross-section along the section line D-D in Fig. 6. In the situation of Fig. 9 the pressure element 12 is in its position but unfastened and without the fastening element 13, and in the situation of Fig. 10 the pressure element 12 is fastened to the flighting 9 of the compression screw 8 with the fastening element 13 of the pressure element 12.

At least in the section B the outer diameter of the base flighting 9 is smaller than the inner diameter of the drum of the screen 10. In that case the structure comprises a gap or tolerance between the outer periphery of the flighting 9 and the inner surface of the drum of the screen 10. Whereas the outer periphery of the pressure element 12 follows the outer periphery of the flighting 9 but the outer periphery of the pressure element 12 extends in radial direction beyond the outer periphery of the flighting 9 a distance S that is greater than the gap between the outer periphery of the flighting 9 and the inner surface of the drum of the screen 10. Preferably, the distance S is at least about 1 mm greater that the said gap. Thanks to this the outer edge or periphery of the pressure element 12 presses tightly against the inner surface of the drum of the screen 10 closing at the same time the said gap. Preferably the distance S is so large that a part of the outer surface of the pressure element 12 is pressed through the mesh apertures of the drum of the screen 10 thus keeping the apertures open.

The thickness W of the pressure element 12 is at least three times, preferably at least four times as large as the gap between the outer periphery of the flighting 9 and the inner surface of the drum of the screen 10. That prevents the pressure element 12 from squeezing into the gap between the outer periphery of the flighting 9 and the inner surface of the drum of the screen 10.

Advantageously, the fastening structure has been arranged so that both the outer side surfaces, i.e. the first side surface of the flighting 9 and the second side surface of the pressure element 12 are as smooth as possible. That is important at least in the area of the section B where the structure comprises the pressure element 12. In order to achieve a sufficient smoothness, both ends of the fastening elements 13 must be embedded in the side surfaces as has been done in the situation of Fig. 10. For that purpose, the fastening hole 9c in the flighting 9 comprises a countersink on the first side surface of the flighting 9. Whereas the pressure element 12 is flexible material which makes it possible that on the second side of the flighting 9 the flat head of the fastening element 13 will sit flush with or below the level of the side surface of the pressure element 12.

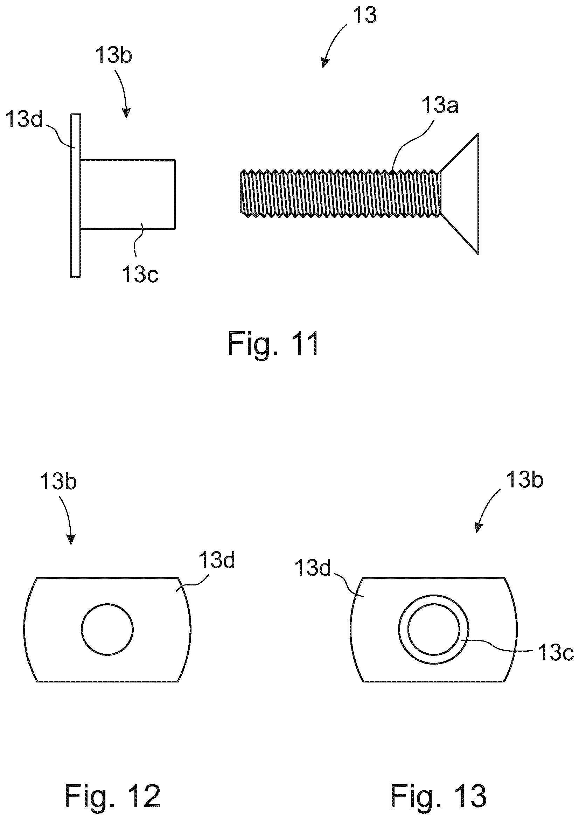

Figs. 11-13 present in a simplified view the fastening element 13 of the pressure element 12 according to the invention. Fig. 11 presents the fastening element 13 in a side view, Fig. 12 presents a nut part 13b of the fastening element 13 in a back view and Fig. 13 presents the nut part 13b of the fastening element 13 in a front view.

The fastening element 13 preferably comprises two parts; a screw part 13a and a nut part 13b. The screw part 13b may be an ordinary screw with a countersunk head. The head of the screw part 13b is dimensioned so that the head sits flush with or below the level of first side surface of the flighting 9 when the fastening element 13 is fastened.

The nut part 13b comprises a screw bushing 13c and a flat plate 13d fastened into the first end of the screw bushing 13c. The screw bushing 13c has an inside thread that matches with the outside thread of the screw part 13a. Preferably, the thickness of the plate 13d is so small that the plate 13d can easily be embedded in the flexible second side surface of the pressure element 12 when the pressure element 12 is fastened into its position.

It is obvious to the person skilled in the art that the invention is not restricted to the examples described above but that it may be varied within the scope of the claims presented below. Thus, for example, the structures and components of separator apparatus may be different from what is presented.

It is also obvious to the person skilled in the art that the embedding of the fastening elements may be done in a different way as presented above. For instance, instead of using countersinking and countersunk screws counterboring and corresponding screws may be used when fastening the pressure elements. It is important that outwards facing surfaces of the flighting, especially in the area of the section B inside the screen, are as smooth as possible in order to prevent sticking of the material to be separated to the flighting.

It is still obvious to the person skilled in the art that the apparatus according to the invention can be also used for separation of other material than slurry.

It is still obvious to a person skilled in the art that the apparatus according to the invention is also suitable for the separation of non-agricultural slurry. The apparatus according to the invention can, among other things, separate biomass and can be used, for example, in a pulp industry.

## Claims

1. Apparatus for separating liquid and solid material from each other, which apparatus comprises at least a drum-type screen (10) and a compression screw (8) equipped with a rotation shaft (8a) and a flighting (9) and placed to extend through the screen (10), and which flighting (9) comprises an outer edge (9a) on its periphery and is equipped with a pressure element (12) made advantageously of flexible material and fastened onto the pressure side of the flighting (9) facing towards the second end of the compression screw (8), and which apparatus comprises in the longitudinal direction of the compression screw (8) a first section (A), a second section (B) and a third section (C), where in the area of the first section (A) which area is in the area of the first end of the compression screw (8) the apparatus comprises a cutting element (11) which together with the outer edge (9a) of the flighting (9) forms a cutting mechanism for cutting hay, straws and other solid material into smaller pieces, **characterized in that** the pressure element (12) is in the area of the second section (B) which area is in the area of the screen (10), and that the single pressure element (12) is a flat annular plate with a center hole (12c) whose diameter is bigger than the outer diameter of the rotation shaft (8a) of the compression screw (8).

2. Apparatus for separating liquid and solid material from each other according to claim 1, **characterized in that** the outer periphery of the pressure element (12) extends in radial direction beyond the outer periphery of the flighting (9) a distance (S) that is greater than the gap between the outer periphery of the flighting (9) and the inner surface of the drum of the screen (10).

3. Apparatus for separating liquid and solid material from each other according to claim 1 or 2, **characterized in that** to prevent the pressure element (12) from squeezing into the gap between the outer periphery of the flighting (9) and the inner surface of the drum of the screen (10) the thickness (W) of the pressure element (12) is at least three times, preferably at least four times as large as the gap between the outer periphery of the flighting (9) and the inner surface of the drum of the screen (10).

4. Apparatus for separating liquid and solid material from each other according to claims 1, 2 or 3, **characterized in that** the pressure element (12) is fastened onto the side of the flighting (9) with fastening elements (13), and that in order to make the side surfaces of the flighting (9) smooth the ends of the fastening elements (13) are embedded in the side surfaces of the flighting (9).

5. Apparatus for separating liquid and solid material from each other according to claim 4, **characterized in that** the length of the fastening elements (13) is equal or smaller than the thickness of the flighting (9) together with the pressure element (12).

6. Apparatus for separating liquid and solid material from each other according to any of claims above, **characterized in that** to create a dry matter stopper the apparatus comprises in the area of the third section (C) which area is in the area of the second end of the screen (10) a free space (10a) without the flighting (9), an annular reducing element (14) in connection with the second end of the drum of the screen (10), and a counter-pressure element (15) in connection with the reducing element (14).

7. Apparatus for separating liquid and solid material from each other according to claim 6, **characterized in that** the reducing element (14) comprises a center hole with a diameter smaller than the inner diameter of the drum of the screen (10) at the second end of the screen (10).

8. Apparatus for separating liquid and solid material from each other according to claim 6 or 7, **characterized in that** the counter-pressure element (15) is a flat annular plate with a center hole the diameter of which is smaller than the outer diameter of the rotation shaft (8a) at the position of the counter-pressure element (15), and that the counter-pressure element (15) is pressed tightly from its center hole onto the rotation shaft (8a).

9. Apparatus for separating liquid and solid material from each other according to claims 6, 7, or 8, **characterized in that** for monitoring the state of the counter-pressure element (15) the apparatus comprises a monitoring element (17).

10. Apparatus for separating liquid and solid material from each other according to any of the claims 6-9 above, **characterized in that** the relation of the length of the free space (10a) to the inner diameter of the drum of the screen (10) is suitably between 0,2...1,5 and preferably between 0,8...1,2.

## Patentansprüche

1. Vorrichtung zur Trennung von flüssigem und festem Material voneinander, welche Vorrichtung wenigstens ein Trommelsieb (10) und eine Druckschraube (8) besitzt, die mit einer rotierenden Welle (8a) und einer Spindel (9) ausgestattet und so platziert ist, dass sie durch das Sieb (10) verläuft, und welche Spindel (9) eine äußere Kante (9a) an ihrem Rand besitzt und mit einem Druckelement (12) ausgestattet ist, das vorzugsweise aus flexiblem Material hergestellt und auf der Druckseite der Spindel (9) befestigt ist, die zum anderen Ende der Druckschraube (8) zeigt, und welche Vorrichtung in Längsrichtung der Druckschraube (8) einen ersten Abschnitt (A), einen zweiten Abschnitt (B) und einen dritten Abschnitt (C) besitzt, wobei die Vorrichtung im Bereich des ersten Abschnitts (A), der sich im Bereich des einen Endes der Druckschraube (8) befindet, ein Schneideelement (11) besitzt, das zusammen mit der äußeren Kante (9a) der Spindel (9) einen Schneidemechanismus zum Schneiden von Heu, Stroh und anderem festem Material in kleinere Stücke bildet, **dadurch gekennzeichnet, dass** sich das Druckelement (12) im Bereich des zweiten Abschnitts (B) befindet, welcher Abschnitt sich im Bereich des Siebs (10) befindet, und dass das einzelne Druckelement (12) eine flache, ringförmige Platte mit einem zentralen Loch (12c) ist, dessen Durchmesser größer als der Außendurchmesser der rotierenden Welle (8a) der Druckschraube (8) ist.

2. Vorrichtung zur Trennung von flüssigem und festem Material voneinander nach Anspruch 1, **dadurch gekennzeichnet, dass** der äußere Rand des Druckelements (12) in radialer Richtung mit einem Abstand (S) über den äußeren Rand der Spindel (9) hinausragt, welcher Abstand größer als der Zwischenraum zwischen dem äußeren Rand der Spindel (9) und der Innenseite der Trommel des Siebs (10) ist.

3. Vorrichtung zur Trennung von flüssigem und festem Material voneinander nach Anspruch 1 oder 2, **dadurch gekennzeichnet, dass**, um zu verhindern, dass das Druckelement (12) in den Zwischenraum zwischen dem äußeren Rand der Spindel (9) und der Innenseite der Trommel des Siebs (10) gequetscht wird, die Dicke (W) des Druckelements (12) wenigstens drei Mal, vorzugsweise vier Mal so groß wie der Zwischenraum zwischen dem äußeren Rand der Spindel (9) und der Innenseite der Trommel des Siebs (10) ist.

4. Vorrichtung zur Trennung von flüssigem und festem Material voneinander nach Anspruch 1, 2 oder 3, **dadurch gekennzeichnet, dass** das Druckelement (12) mit Befestigungselementen (13) auf der Seite der Spindel (9) befestigt ist, und dass die Enden der Befestigungselemente (13) in die Seitenflächen der Spindel (9) eingelassen sind, damit die Seitenflächen der Spindel (9) glatt sind.

5. Vorrichtung zur Trennung von flüssigem und festem Material voneinander nach Anspruch 4, **dadurch gekennzeichnet, dass** die Länge der Befestigungselemente (13) kleiner oder gleich der Dicke der Spindel (9) zusammen mit dem Druckelement (12) ist.

6. Vorrichtung zur Trennung von flüssigem und festem Material voneinander nach einem der vorstehenden Ansprüche, **dadurch gekennzeichnet, dass** die Vorrichtung, um einen Pfropfen für das trockene Material zu erzeugen, einen Bereich im dritten Abschnitt (c) besitzt, der im Bereich des anderen Endes des Siebs (10) ein freier Raum (10a) ohne die Spindel (9) und ohne ein ringförmiges Reduzierelement (14) in Verbindung zum anderen Ende der Trommel des Siebs (10) und ein Gegendruckelement (15) in Verbindung zum Reduzierelement (14) ist.

7. Vorrichtung zur Trennung von flüssigem und festem Material voneinander nach Anspruch 6, **dadurch gekennzeichnet, dass** das Reduzierelement (14) ein zentrales Loch mit einem Durchmesser besitzt, der kleiner als der Innendurchmesser der Trommel des Siebs (10) am anderen Ende des Siebs (10) ist.

8. Vorrichtung zur Trennung von flüssigem und festem Material voneinander nach Anspruch 6 oder 7, **dadurch gekennzeichnet, dass** das Gegendruckelement (15) eine flache, ringförmige Platte mit einem zentralen Loch ist, dessen Durchmesser kleiner als der Außendurchmesser der rotierenden Welle (8a) an der Stelle des Gegendruckelements (15) ist, und dass das Gegendruckelement (15) von seinem zentralen Loch fest auf die rotierende Welle (8a) gedrückt wird.

9. Vorrichtung zur Trennung von flüssigem und festem Material voneinander nach Anspruch 6, 7 oder 8, **dadurch gekennzeichnet, dass** die Vorrichtung ein Überwachungselement (17) zur Überwachung des Zustands des Gegendruckelements (15) besitzt.

10. Vorrichtung zur Trennung von flüssigem und festem Material voneinander nach einem der vorstehenden Ansprüche 8-11, **dadurch gekennzeichnet, dass** das Verhältnis der Länge des freien Raums (10a) zum Innendurchmesser der Trommel des Siebs (10) zweckmäßigerweise zwischen 0,2 ... 1,5 und vorzugsweise zwischen 0,8 ... 1,2 beträgt.

## Revendications

1. Appareil pour séparer des matières liquides et solides les unes des autres, lequel appareil comprend au moins un tamis à tambour (10) et une vis de compression (8) équipée d'un arbre de rotation (8a) et d'une volée (9) et placée pour s'étendre à travers le tamis (10), et dont la volée (9) comprend un bord extérieur (9a) sur sa périphérie et est équipée d'un élément de pression (12) constitué avantageusement d'un matériau flexible et fixé sur le côté pression de la volée (9) orienté vers la deuxième extrémité de la vis de compression (8), et dont l'appareil comprend dans la direction longitudinale de la vis de compression (8) une première section (A), une deuxième section (B) et une troisième section (C), où dans la zone de la première section (A) qui est dans la zone de la première extrémité de la vis de compression (8), l'appareil comprend un élément de coupe (11) qui, avec le bord extérieur (9a) de la volée (9), forme un mécanisme de coupe pour couper le foin, les pailles et d'autres matériaux solides en plus petits morceaux, **caractérisé en ce que** l'élément de pression (12) se trouve dans la zone de la deuxième section (B) qui se trouve dans la zone du tamis (10), et **en ce que** l'élément de pression unique (12) est une plaque annulaire plate avec un trou central (12c) dont le diamètre est plus grand que le diamètre extérieur de l'arbre de rotation (8a) de la vis de compression (8).

2. Appareil pour séparer les matières liquides et solides les unes des autres selon la revendication 1, **caractérisé en ce que** la périphérie extérieure de l'élément de pression (12) s'étend dans la direction radiale au-delà de la périphérie extérieure de la volée (9) sur une distance (S) qui est supérieure à l'écart entre la périphérie extérieure de la volée (9) et la surface intérieure du tambour du tamis (10).

3. Appareil pour séparer les matières liquides et solides les unes des autres selon la revendication 1 ou 2, **caractérisé en ce que** pour empêcher l'élément de pression (12) de s'écraser dans l'espace entre la périphérie extérieure de la volée (9) et la surface intérieure du tambour du tamis (10), l'épaisseur (W) de l'élément de pression (12) est d'au moins trois fois, de préférence au moins quatre fois plus grande que l'espace entre la périphérie extérieure de la volée (9) et la surface intérieure du tambour du crible (10).

4. Appareil pour séparer les matières liquides et solides les unes des autres selon les revendications 1, 2 ou 3, **caractérisé en ce que** l'élément de pression (12) est fixé sur le côté de la volée (9) avec des éléments de fixation (13), et qu'afin de rendre les surfaces latérales de la volée (9) lisses, les extrémités des éléments de fixation (13) sont encastrées dans les surfaces latérales de la volée (9).

5. Appareil pour séparer les matières liquides et solides les unes des autres selon la revendication 4, **caractérisé en ce que** la longueur des éléments de fixation (13) est égale ou inférieure à l'épaisseur de la voilure (9) avec l'élément de pression (12).

6. Appareil pour séparer les matières liquides et solides les unes des autres selon l'une quelconque des revendications ci-dessus, **caractérisé en ce que**, pour créer un bouchon de matière sèche, l'appareil comprend, dans la zone de la troisième section (C) qui se trouve dans la zone de la deuxième extrémité du tamis (10), un espace libre (10a) sans la volée (9), un élément réducteur annulaire (14) en liaison avec la deuxième extrémité du tambour du tamis (10), et un élément de contre-pression (15) en liaison avec l'élément réducteur (14).

7. Appareil pour séparer les matières liquides et solides les unes des autres selon la revendication 6, **caractérisé en ce que** l'élément réducteur (14)comprend un trou central d'un diamètre inférieur au diamètre intérieur du tambour du tamis (10) à la deuxième extrémité du tamis (10).

8. Appareil pour séparer les matières liquides et solides les unes des autres selon la revendication 6 ou 7, **caractérisé en ce que** l'élément de contre-pression (15) qui est une plaque annulaire plate avec un trou central dont le diamètre est inférieur au diamètre extérieur de l'arbre de rotation (8a) à la position de l'élément de contre-pression (15), et que l'élément de contre-pression (15) est pressé fermement à partir de son trou central sur l'arbre de rotation (8a).

9. Appareil pour séparer un liquide et un solide l'un de l'autre selon les revendications 6, 7 ou 8, **caractérisé en ce que** pour surveiller l'état de l'élément de contre-pression (15), l'appareil comprend un élément de surveillance (17).

10. Appareil pour séparer les liquides et les matières solides les uns des autres selon l'une des revendications 8-11 ci-dessus, **caractérisé en ce que** le rapport entre la longueur de l'espace libre (10a) et le diamètre intérieur du tambour du tamis (10) est convenablement compris entre 0,2...1,5 et de préférence entre 0,8...1,2.
